# EUROPÄISCHE PATENTSCHRIFT

(11) **EP 3 412 018 B1**
(45) Veröffentlichungstag und Bekanntmachung des Hinweises auf die Patenterteilung: **16.09.2020**
(21) Anmeldenummer: 17707892.0
(22) Anmeldetag: 01.03.2017
(51) Int. Cl.: H04L 9/32, H04L 29/06

(54) **VERFAHREN ZUM AUSTAUSCH VON NACHRICHTEN ZWISCHEN SICHERHEITSRELEVANTEN VORRICHTUNGEN**
METHOD FOR EXCHANGING MESSAGES BETWEEN SECURITY-RELEVANT DEVICES
PROCÉDÉ D'ÉCHANGE DE MESSAGES ENTRE DISPOSITIFS DE SÉCURITÉ

(30) Priorität: 29.03.2016 DE 102016205122
(43) Veröffentlichungstag der Anmeldung: 12.12.2018
(73) Patentinhaber: Siemens Mobility GmbH, 81739 München (DE)
(72) Erfinder: ECKELMANN-WENDT, Uwe, 38302 Wolfenbüttel (DE); GERKEN, Stefan, 38116 Braunschweig (DE)
(86) Internationale Anmeldenummer: PCT/EP2017/054749
(87) Internationale Veröffentlichungsnummer: WO 2017/167527

(56) Entgegenhaltungen:
- EP-A1- 2 728 824
- DE-A1-102014 111 361
- US-A1- 2007 195 960

## Beschreibung

Die Erfindung betrifft ein Verfahren zum Austausch von Nachrichten zwischen sicherheitsrelevanten Vorrichtungen sowie ein Kommunikationssystem zum Ausführen des Verfahrens. Die Erfindung wird durch die beigefügten Ansprüche bestimmt.

In einem Kommunikationssystem können sicherheitsrelevante Vorrichtungen von unterschiedlicher Kritikalität bzw. unterschiedlicher Sicherheitsklasse vorliegen. Solche Sicherheitsklassen bewerten die Anforderungen beispielsweise an Zuverlässigkeit und Integrität von Sicherheitsfunktionen von sicherheitsrelevanten Vorrichtungen wie zum Beispiel eines Geräts, eines Systems, eines Programms, einer Maschine, einer Anlage, eines Prozesses etc. Je höher die Sicherheitsklasse, desto höher das Level an Sicherheit und Zuverlässigkeit und desto geringer das Risiko eines Ausfalls bzw. desto höher die Risikoreduzierung. In Bezug auf die Norm EN50129 wären dies beispielsweise sicherheitsrelevante Vorrichtungen für das Sicherheitsintegrationslevel ("safety integrity level") SIL 0,1,2,3 oder 4. In einem Kommunikationssystem ist dabei zu vermeiden, dass ein Absender einer niederen Sicherheitsklasse, beispielsweise SIL 1, eine Nachricht so verschicken kann, dass es für eine Empfängereinheit irrtümlich so aussieht, als käme sie von einem Absender einer höheren Sicherheitsklasse, also beispielsweise von SIL 2,3 oder 4. Bisher wurde das so gelöst, dass die Kommunikationssysteme der Kommunikationspartner unterschiedlicher Sicherheitsklassen physikalisch voneinander getrennt wurden. Sonst musste explizit nachgewiesen werden, dass Kommunikationspartner einer niederen Sicherheitsklasse keine gültigen Nachrichten einer höheren Sicherheitsklasse erzeugen können. Zum Beispiel wurde bisher realisiert, dass ausschließlich Nachrichten derselben Sicherheitsklasse versendet werden (z.B. die Protokolle SAHARA, RaSTA, Secly, DevCycly, PDS, SBS, WNC+, ProfiSafe, BuRep, SEuzi,...). Das Dokument EP 27 28 824 A1 offenbart ein Kommunikationssystem zum Ausführen eines Verfahrens zum Austausch von Nachrichten zwischen sicherheitsrelevanten Vorrichtungen in Form von Knoten beschrieben. Diese Knoten sind jeweils miteinander verbunden. Zum Einsatz kommen Sicherheitsschlüssel mit einer Schlüssellänge von beispielsweise 512 bit. Die Knoten können mit den Sicherheitsschlüsseln Nachrichten entschlüsseln wobei hierfür jeder Knoten alle notwendigen öffentlichen Schlüssel für die verwendeten privaten Sicherheitsschlüssel zur Verfügung hat.

Dokument US 2007195960 A1 offenbart ein Verfahren zum Freigeben eines Datensatzes mit mehreren Sicherheitsklassifikationen zwischen einer oder mehreren Entitäten und / oder zwischen einer oder mehreren Organisationen. Öffentliche Schlüssel zur selektiven Verschlüsselung des Datensatzes mit mehreren Sicherheitsklassifikationen werden in einer Tabelle mit öffentlichen Schlüsseln verfügbar gemacht. Ein dem öffentlichen Schlüssel entsprechender privater Schlüssel wird zum Entschlüsseln des selektiv verschlüsselten Datensatzes verwendet. Bei Bedarf können auch Paare aus öffentlichem und privatem Schlüssel generiert werden, um ein Dokument mit mehreren Sicherheitsklassifizierungen zu verschlüsseln. Ein einzelner Datensatz kann bei Bedarf mit zusätzlichen Sicherheitseinstufungen weiter verschlüsselt werden.

Die Aufgabe besteht darin, ein Verfahren zum Austausch von Nachrichten zwischen sicherheitsrelevanten Vorrichtungen in einem Kommunikationssystem vorzuschlagen, wobei eine unbeabsichtigte, zufällige Vortäuschung einer höheren Sicherheitsklasse identifizierbar sein soll.

Das erfindungsgemäße Verfahren zum Austausch von Nachrichten zwischen sicherheitsrelevanten Vorrichtungen umfasst grundsätzlich folgende Schritte. In einem ersten Schritt a) wird eine Mehrzahl von miteinander verbundenen sicherheitsrelevanten Vorrichtungen bereitgestellt, wobei jede sicherheitsrelevante Vorrichtung einer bestimmten Sicherheitsklasse zugeordnet ist. In einem weiteren Schritt b) werden Schlüsselpaare umfassend einen privaten Schlüssel und einen dazu passenden öffentlichen Schlüssel jeder Sicherheitsklasse zugeordnet, wobei sich die Schlüssel und Schlüsselpaare jeder entsprechenden Sicherheitsklasse jeweils voneinander unterscheiden. In einem weiteren Schritt c) werden die öffentlichen Schlüssel jeder Sicherheitsklasse jeder sicherheitsrelevanten Vorrichtung zur Verfügung gestellt. In einem weiteren Schritt d) werden diejenigen privaten Schlüssel einer jeweiligen sicherheitsrelevanten Vorrichtung zur Verfügung gestellt entsprechend einer Sicherheitsklasse, die niedriger oder gleich der Sicherheitsklasse der jeweiligen sicherheitsrelevanten Vorrichtung ist. In einem weiteren Schritt e) wird eine Nachricht durch eine sicherheitsrelevante Vorrichtung gesendet und mit einem der sicherheitsrelevanten Vorrichtung zur Verfügung stehenden privaten Schlüssel einer bestimmten Sicherheitsklasse verschlüsselt. In einem weiteren Schritt f) wird eine Nachricht durch eine oder mehrere sicherheitsrelevante Vorrichtungen empfangen und die Sicherheitsklasse zu der Nachricht durch Entschlüsselung der Nachricht mit dem öffentlichen Schlüssel zu der gleichen Sicherheitsklasse wie der zur Verschlüsselung verwendete private Schlüssel aus Schritt e) identifiziert.

Eine sicherheitsrelevante Vorrichtung kann beispielsweise eine Steuereinheit, Steuergerät, Rechner, Programm, Software, Hardware, Maschine, Gerät, Komponente, eine Systemeinheit oder eine Anlageeinheit etc. sein, die für eine bestimmte Sicherheitsklasse ausgelegt ist und mit anderen sicherheitsrelevanten Vorrichtungen Nachrichten austauscht. Im Rahmen der Erfindung ist einer sicherheitsrelevanten Vorrichtung eine Sicherheitsklasse zugeordnet. Die Vorrichtung kommuniziert mittels Nachrichten mit anderen sicherheitsrelevanten Vorrichtungen. Vereinfacht wird im Folgenden statt von einer Nachricht, die von einer sicherheitsrelevanten Vorrichtung mit einer ihr zugeordneten Sicherheitsklasse stammt, vereinbart, dass eine Nachricht einer Sicherheitsklasse zugeordnet ist. Eine sicherheitsrelevante Vorrichtung kann Nachrichten gleicher oder niederer Sicherheitsklasse verschlüsseln bzw. signieren, wobei das Senden bzw. Empfangen beispielsweise über eine zugeordnete oder integrierte Kommunikationseinheit geschehen kann. Ferner kann die sicherheitsrelevante Vorrichtung mittels privater Schlüssel Nachrichten signieren bzw. verschlüsseln als auch empfangene Signaturen mit öffentlichen Schlüsseln entschlüsseln. Durch Vergleich der empfangenen Nachricht mit der entschlüsselten Signatur findet eine Verifizierung statt. Bei Übereinstimmung ist gewährleistet, dass die Sicherheitsklasse des zur Entschlüsselung verwendeten öffentlichen Schlüssels mit der Sicherheitsklasse der Nachricht übereinstimmt, wodurch die Sicherheitsklasse zu der Nachricht eindeutig identifiziert ist. Diese kann den empfangenden sicherheitsrelevanten Vorrichtungen explizit oder implizit bekannt sein. Ferner ist durch die erfolgreiche Entschlüsselung auch die Integrität geprüft, sprich die Unveränderlichkeit der übertragenen Nachricht.

Das Verfahren hat den Vorteil, dass keine zufällige Vortäuschung einer höheren Sicherheitsklasse durch fehlerhafte Technik unbemerkt bleibt. Eine solche zufällige Vortäuschung kann beispielsweise programmfehlerbedingt oder hardwarefehlerbedingt sein. Absichtliche Vortäuschung einer höheren Sicherheitsklasse ist von der Erfindung nicht eingeschlossen. In einem solchen Fall einer zufälligen Vortäuschung einer höheren Sicherheitsklasse kann der entsprechende öffentliche Schlüssel zu dieser vorgetäuschten Sicherheitsklasse der empfangenden sicherheitsrelevanten Vorrichtung keine Entschlüsselung erzielen. Ferner kann dann sogar die eigentliche Sicherheitsklasse zu der Nachricht durch Auffinden des passenden öffentlichen Schlüssels identifiziert werden.

Zudem können nun vorteilhaft in einem Protokoll eines Kommunikationssystems Nachrichten unterschiedlicher Sicherheitsklassen ausgetauscht werden. Eine physikalische Trennung für Nachrichten unterschiedlicher Sicherheitsklassen ist somit nicht mehr erforderlich. Eine zufällige Maskerade (Vortäuschung eines falschen Absenders) zu einer höheren Sicherheitsklasse ist vernachlässigbar. Ferner kann dieses Verfahren auch nachträglich in vorhandene Protokolle eingepflegt werden, denn es verändert nicht die Struktur der Dateneinheiten des Protokolls.

Bevorzugt umfasst die verschlüsselte Nachricht den eigentlichen Nachrichteninhalt und einen daran angehängten verschlüsselten Prüfwert. Als Prüfwerte kommen dabei bevorzugt Hashwerte zur Anwendung. Alternativ können aber auch CRC (zyklische Redundanzprüfung), Checksumme, Digest etc. als Sicherheitscodes Anwendung finden. Prüfwerte wie z.B. Hashwerte dienen dazu, Nachrichten beliebiger Länge auf eine feste Länge mittels Hashfunktionen abzubilden. Dadurch wird das Datenvolumen für das Signieren bzw. Verschlüsseln reduziert.

Bevorzugt erfolgt ferner eine Integritätsprüfung durch Prüfen der Gleichheit des entschlüsselten Prüfwerts mit dem aus der gesendeten Nachricht errechneten Prüfwert. Bei Übereinstimmung ist die Sicherheitsklasse zu der Nachricht identifiziert, die mit der Sicherheitsklasse des verwendeten öffentlichen Schlüssels übereinstimmt. Ferner ist die Integrität geprüft. Die Länge des Prüfwerts muss dabei auch nicht erweitert werden. Eine Protokollerweiterung ist demnach (z.B. bei RaSTA) einfach möglich, da die Prüfwerterstellung schon zusätzliche verdeckte Daten mitsichern kann, wie z.B. Session-Identifizierung.

Bevorzugt erfolgt das Entschlüsseln durch eine sicherheitsrelevante Vorrichtung durch Verwenden aller öffentlichen Schlüssel der verschiedenen Sicherheitsklassen, bis die verschlüsselte Nachricht oder der verschlüsselte Prüfwert durch einen öffentlichen Schlüssel einer Sicherheitsklasse entschlüsselt ist. Dadurch muss der empfangenden sicherheitsrelevanten Vorrichtung die Sicherheitsklasse der Nachricht nicht bekannt sein. Die Identifizierung der Sicherheitsklasse erfolgt dann durch die Sicherheitsklasse desjenigen öffentlichen Schlüssels, der zu einer Entschlüsselung der Nachricht oder des Prüfwerts führt.

Die Sicherheitsklassen können ein Sicherheitsintegrationslevel von 0, 1, 2, 3, 4 haben. Dies sind die Sicherheitsklassen der Normen IEC61508 und IEC61511 bzw. der Norm EN50129.

Mindestens eine sicherheitsrelevante Vorrichtung hat bevorzugt ein Sicherheitsintegrationslevel von größer oder gleich 1.

Bevorzugt ergibt der private Schlüssel multipliziert mit dem öffentlichen Schlüssel aus der gleichen Sicherheitsklasse in der Restklasse 1, wobei dadurch wieder der originale Prüfwert oder die originale Nachricht erhalten wird. Dieses Verfahren ist eine laufzeitmäßig günstige asymmetrische Verschlüsselung. Die Ausführgeschwindigkeit liegt dabei im Bereich von Mikrosekunden (1µs=10⁻⁶s) oder darunter. Diese besonders einfache und schnelle asymmetrische Verschlüsselung eignet sich insbesondere daher, da es sich lediglich um die Erkennung von zufälligem Fehlverhalten handelt.

Ferner wird ein Kommunikationssystem zum Ausführen des Verfahrens vorgeschlagen, das eine Mehrzahl von sicherheitsrelevanten Vorrichtungen umfasst, die jeweils miteinander verbunden sind und jeweils einer bestimmten Sicherheitsklasse zugeordnet sind. Erfindungsgemäß weist jede sicherheitsrelevante Vorrichtung zum Entschlüsseln einer Nachricht oder eines Prüfwerts jeden öffentlichen Schlüssel aller Sicherheitsklassen auf und zum Verschlüsseln einer Nachricht oder eines Prüfwerts private Schlüssel bis zu der Sicherheitsklasse, für die die jeweilige sicherheitsrelevante Vorrichtung ausgelegt ist.

Dieses Kommunikationssystem weist die Vorteile des erfindungsgemäßen Verfahrens auf. Im Besonderen ergibt sich der Vorteil, dass es Nachrichten mit unterschiedlichen Sicherheitsklassen zwischen den sicherheitsrelevanten Vorrichtungen austauschen kann, wobei durch die Zuordnung der Sicherheitsklassen zu den entsprechenden Schlüsseln eine Identifikation der Sicherheitsklasse der Nachricht ermöglicht wird. Es kann somit für ein Kommunikationssystem zur Übertragung von Nachrichten unterschiedlicher Sicherheitsklassen dasselbe Protokoll verwendet werden (z.B. RaSTA).

Ferner wird ein Computerprogramm vorgeschlagen, das es einer Datenverarbeitungseinrichtung ermöglicht, nachdem es in Speichermittel der Datenverarbeitungseinrichtung geladen worden ist, ein Verfahren zum Austausch von sicherheitsrelevanten Vorrichtungen durchzuführen.

Ferner wird ein computerlesbares Speichermedium vorgeschlagen, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Austausch von sicherheitsrelevanten Vorrichtungen durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 eine schematische Darstellung einer festen Zuordnung von Schlüsselpaaren an Sicherheitsklassen,
Figur 2 eine schematische Darstellung des erfindungsgemäßen Verfahrens zum Austausch von Nachrichten mit unterschiedlichen Sicherheitsklassen nach einer beispielhaften Ausführungsform, und
Figur 3 eine schematische Darstellung eines Kommunikationssystems zur Ausführung des Verfahrens zum Austausch von Nachrichten mit unterschiedlichen Sicherheitsklassen nach einer beispielhaften Ausführungsform.

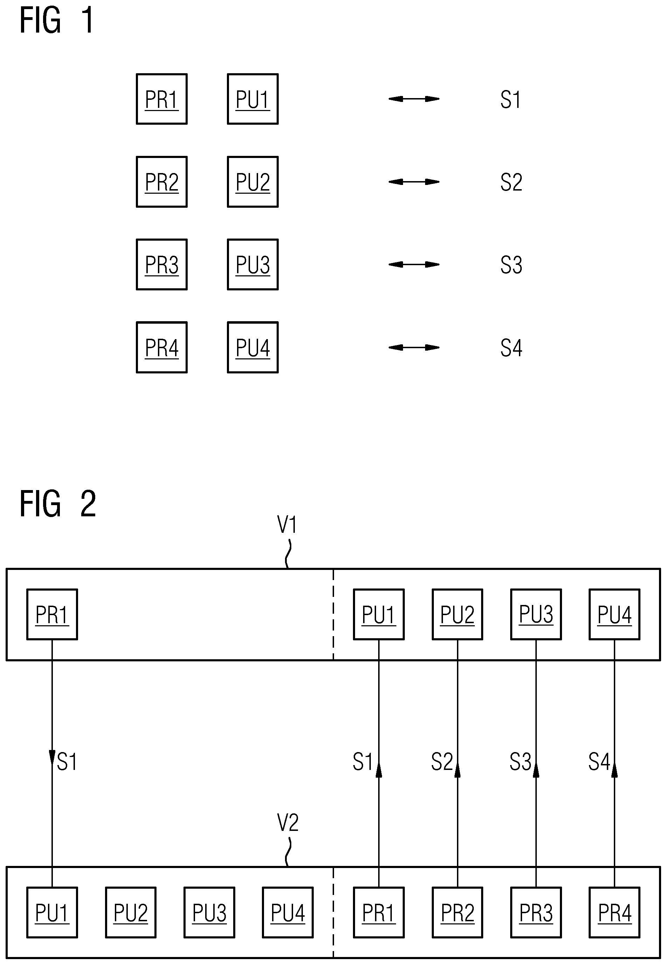

In der Figur 1 ist eine schematische Darstellung einer festen Zuordnung von Schlüsselpaaren an Sicherheitsklassen S1, S2, S3, S4 vorgenommen. Die Anzahl der Sicherheitsklassen S1, S2, S3, S4 ist hierbei beispielhaft als vier gewählt. Es kann jedoch prinzipiell beliebig viele Sicherheitsklassen geben. Von Bedeutung ist beispielsweise die Sicherheitsklasse das Sicherheitsintegrationslevel SIL von 0, 1, 2, 3, 4 der Normen IEC61508 und IEC61511 bzw. der Norm EN50129. Mindestens eine sicherheitsrelevante Vorrichtung hat bevorzugt ein Sicherheitsintegrationslevel von größer oder gleich 1. Die Sicherheitsklassen sind dabei auch nicht auf diese Normen beschränkt. Es sind auch außerhalb dieser Normen unterschiedliche Sicherheitsniveaus bzw. unterschiedliche Sicherheitsanforderungen von der Erfindung eingeschlossen.

Die Schlüsselpaare umfassen einen privaten Schlüssel PR1, PR2, PR3, PR4 und einen dazu passenden öffentlichen Schlüssel PU1, PU2, PU3, PU4. Mit passend ist hierbei gemeint, dass sich eine mit dem jeweiligen privaten Schlüssel PR1, PR2, PR3, PR4 verschlüsselte Nachricht oder verschlüsselter Prüfwert durch den jeweiligen öffentlichen Schlüssel PU1, PU2, PU3, PU4 entschlüsseln lässt. Diese werden jeder Sicherheitsklasse S1, S2, S3, S4 fest zugeordnet, wobei sich die Schlüssel und Schlüsselpaare jeweils voneinander unterscheiden. Somit liegen bevorzugt ebenso viele Schlüsselpaare vor wie es Sicherheitsklassen S1, S2, S3, S4 gibt, sprich auch dann, wenn eine andere Anzahl an Sicherheitsklassen S1, S2, S3, S4 vorliegt. In anderen Ausführungsformen können auch mehrere Schlüsselpaare je Sicherheitsklasse vorliegen. Rein beispielhaft wird hierbei vereinbart, dass die Sicherheitsklassen S1, S2, S3, S4 die Ordnung S4>S3>S2>S1 in puncto Sicherheitsanforderung erfüllen, das heißt, beispielsweise ist die Sicherheitsklasse S3 höher als die Sicherheitsklasse S2 usw. Ferner wird vereinbart, dass der private Schlüssel PR1 und der öffentliche Schlüssel PU1 der Sicherheitsklasse S1 fest zugeordnet sind, der private Schlüssel PR2 und der öffentliche Schlüssel PU2 der Sicherheitsklasse S2 fest zugeordnet sind, der private Schlüssel PR3 und der öffentliche Schlüssel PU3 der Sicherheitsklasse S3 fest zugeordnet sind und der private Schlüssel PR4 und der öffentliche Schlüssel PU4 der Sicherheitsklasse S4 fest zugeordnet sind.

In der Figur 2 ist eine schematische Darstellung des erfindungsgemäßen Verfahrens zum Austausch von Nachrichten mit unterschiedlichen Sicherheitsklassen nach einer beispielhaften Ausführungsform gezeigt.

Hierbei werden beispielhaft zwei sicherheitsrelevante Vorrichtungen V1, V2 bereitgestellt, die miteinander verbunden sind. Die Erfindung ist jedoch nicht auf zwei sicherheitsrelevante Vorrichtungen V1, V2 beschränkt. Es können beliebig viele miteinander verbundene sicherheitsrelevante Vorrichtungen vorgesehen sein, mindestens jedoch zwei. Jede sicherheitsrelevante Vorrichtung V1, V2 ist dabei einer bestimmten Sicherheitsklasse S1, S2, S3, S4 zugeordnet. Eine sicherheitsrelevante Vorrichtung V1, V2 kann beispielsweise eine Steuereinheit, Steuergerät, Rechner, Programm, Software, Hardware, Maschine, Gerät, Komponente, eine Systemeinheit oder eine Anlageeinheit etc. sein, die für eine bestimmte Sicherheitsklasse ausgelegt ist und mit anderen sicherheitsrelevanten Vorrichtungen V1, V2 Nachrichten austauscht. Im Rahmen der Erfindung ist einer sicherheitsrelevanten Vorrichtung K1, K2 eine Sicherheitsklasse S1, S2, S3, S4 zugeordnet. Die Vorrichtung kommuniziert mittels Nachrichten mit anderen sicherheitsrelevanten Vorrichtungen K1, K2. Vereinfacht wird im Folgenden statt von einer Nachricht, die von einer sicherheitsrelevanten Vorrichtung K1, K2 mit einer ihr zugeordneten Sicherheitsklasse S1, S2, S3, S4 stammt, vereinbart, dass eine Nachricht einer Sicherheitsklasse zugeordnet ist. Eine solche sicherheitsrelevante Vorrichtung V1, V2 kann Nachrichten gleicher oder niederer Sicherheitsklasse verschlüsseln bzw. signieren, wobei das Senden bzw. Empfangen beispielsweise über eine zugeordnete oder integrierte Kommunikationseinheit geschehen kann. Ferner kann die sicherheitsrelevante Vorrichtung V1, V2 mittels privater Schlüssel Nachrichten signieren bzw. verschlüsseln als auch empfangene Signaturen mit öffentlichen Schlüsseln entschlüsseln.

Des Weiteren sind diejenigen privaten Schlüssel PR1, PR2, PR3, PR4 für eine jeweilige sicherheitsrelevante Vorrichtung V1, V2 zur Verfügung gestellt entsprechend einer Sicherheitsklasse S1, S2, S3, S4, die niedriger oder gleich der Sicherheitsklasse S1, S2, S3, S4 der jeweiligen sicherheitsrelevanten Vorrichtung V1, V2 ist. In dieser exemplarischen Ausführungsform der Figur 2 ist die sicherheitsrelevante Vorrichtung V1 für die Sicherheitsklasse S1 ausgelegt und besitzt damit lediglich den privaten Schlüssel PR1. Die sicherheitsrelevante Vorrichtung V2 ist beispielhaft für die Sicherheitsklasse S4 ausgelegt, so dass die sicherheitsrelevante Vorrichtung V2 alle privaten Schlüssel PR1, PR2, PR3, PR4 besitzt.

Die Kommunikationsarten der sicherheitsrelevanten Vorrichtungen V1, V2 sind beispielhaft mit Pfeilrichtungen dargestellt. Die sicherheitsrelevante Vorrichtung V1 hat lediglich den privaten Schlüssel PR1 zur Verfügung und es können somit mit dem zur Verfügung stehenden privaten Schlüssel PR1 lediglich Nachrichten der Sicherheitsklasse S1 versendet und verschlüsselt werden, was durch einen Pfeil mit Richtung von sicherheitsrelevanter Vorrichtung V1 zu sicherheitsrelevanter Vorrichtung V2 dargestellt wird. Die sicherheitsrelevante Vorrichtung V2 hat die privaten Schlüssel PR1, PR2, PR3, PR4 zur Verfügung. Somit können von der sicherheitsrelevanten Vorrichtung V2 mit den privaten Schlüsseln PR1, PR2, PR3, PR4 Nachrichten der Sicherheitsklasse S1, S2, S3 und S4 gesendet und verschlüsselt werden, was durch vier Pfeile mit Richtung von sicherheitsrelevanter Vorrichtung V2 zu sicherheitsrelevanter Vorrichtung V1 dargestellt wird.

Da beide sicherheitsrelevante Vorrichtungen V1, V2 über alle öffentlichen Schlüssel PU1, PU2, PU3, PU4 verfügen, können alle verschlüsselten Nachrichten jeder Sicherheitsklasse S1, S2, S3, S4 empfangen bzw. entschlüsselt werden. Beispielsweise kann die sicherheitsrelevante Vorrichtung V1 die verschlüsselte Nachricht aller Sicherheitsklassen S1, S2, S3, S4 von der sicherheitsrelevanten Vorrichtung V2 empfangen und mit dem jeweils passenden öffentlichen Schlüssel PU1, PU2, PU3, PU4 entschlüsseln. Die sicherheitsrelevante Vorrichtung V2 kann die verschlüsselte Nachricht aus der Sicherheitsklasse S1 mit dem öffentlichen Schlüssel PU1 entschlüsseln.

Durch die vorgenommene eindeutige Zuweisung, wie beispielhaft in Figur 1 gezeigt, entspricht die Sicherheitsklasse S1, S2, S3, S4 der jeweiligen verschlüsselten bzw. signierten Nachricht der Sicherheitsklasse S1, S2, S3, S4 des jeweiligen erfolgreich entschlüsselnden öffentlichen Schlüssels PU1, PU2, PU3, PU4. Somit ist also aus dem erfolgreich entschlüsselnden öffentlichen Schlüssel PR1, PR2, PR3, PR4 eine eindeutige Identifikation der Sicherheitsklasse S1, S2, S3, S4 der Nachricht gewährleistet.

Beispielsweise kann in Figur 2 die sicherheitsrelevante Vorrichtung V1 eine Nachricht der Sicherheitsklasse S1 an die sicherheitsrelevante Vorrichtung V2 übermitteln. Die Verschlüsselung durch den privaten Schlüssel S1 kann demnach nur von dem öffentlichen Schlüssel PU1 erfolgreich verifiziert bzw. entschlüsselt werden. Bei Verwendung eines anderen Schlüssels, beispielsweise des öffentlichen Schlüssels PU2, kann keine erfolgreiche Verifikation bzw. Entschlüsselung erfolgen.

Sollte nun beispielsweise die sicherheitsrelevante Vorrichtung V1 eine Nachricht senden, die statt der tatsächlichen Sicherheitsklasse S1 die höhere Sicherheitsklasse S2 (zufällig) vortäuscht, so kann dieses Vortäuschen identifiziert werden. Die sicherheitsrelevante Vorrichtung V2 kann nämlich nicht mit dem Schlüssel PU2 die Signatur entschlüsseln. Dies gelingt ferner durch den Schlüssel PU1, so dass die sicherheitsrelevante Vorrichtung V2 die tatsächliche Sicherheitsklasse S1 feststellt.

Somit hat das Verfahren den Vorteil, dass keine zufällige (z.B. programmfehlerbedingte oder hardwarefehlerbedingte) Vortäuschung einer höheren Sicherheitsklasse durch fehlerhafte Technik unbemerkt bleibt. Absichtliche Vortäuschung einer höheren Sicherheitsklasse ist von der Erfindung nicht eingeschlossen. Zudem können nun vorteilhaft in einem Protokoll eines Kommunikationssystems Nachrichten unterschiedlicher Sicherheitsklassen ausgetauscht werden. Eine physikalische Trennung ist für Nachrichten unterschiedlicher Sicherheitsklassen somit nicht mehr erforderlich. Eine zufällige Maskerade (Vortäuschung eines falschen Absenders) zu einer höheren Sicherheitsklasse ist dabei vernachlässigbar. Ferner kann dieses Verfahren auch nachträglich in vorhandene Protokolle eingepflegt werden, denn es verändert nicht die Struktur der Dateneinheiten des Protokolls.

Das Verschlüsseln bzw. Signieren wird bevorzugt nicht auf die Nachricht selbst, sondern auf einem Prüfwert der Nachricht erzeugt. Bevorzugt sind das Hashwerte oder alternativ CRC (zyklische Redundanzprüfung), Checksumme, Digest etc., die als Sicherheitscode Anwendung finden. Prüfwerte wie z.B. Hashwerte dienen dazu, Nachrichten beliebiger Länge auf eine feste Länge mittels Hashfunktionen abzubilden. Dadurch wird das Datenvolumen vorteilhaft reduziert. In einem solchen Fall findet dann die Verifikation bzw. Entschlüsselung durch Vergleich des entschlüsselten Prüfwerts mit dem aus der übertragenen Nachricht gebildeten Prüfwert statt. Bei Übereinstimmung ist diese Entschlüsselung erfolgreich und die Sicherheitsklasse S1, S2, S3, S4 zu der Nachricht identifiziert, die mit der Sicherheitsklasse S1, S2, S3, S4 des verwendeten öffentlichen Schlüssels PU1, Pu2, Pu3, PU4 übereinstimmt. Durch die Erfindung muss die Länge des Prüfwerts nicht erweitert werden. Eine Protokollerweiterung ist also (z.B. bei RaSTA) einfach möglich, da z.B. die Prüfwerterstellung schon zusätzliche verdeckte Daten mitsichert, wie z.B. Session-Identifizierung.

Das Entschlüsseln durch eine sicherheitsrelevante Vorrichtung kann durch Verwenden aller öffentlicher Schlüssel der verschiedenen Sicherheitsklassen erfolgen, bis die verschlüsselte Nachricht oder der verschlüsselte Prüfwert entschlüsselt ist. An der Figur 2 kann dies beispielhaft demonstriert werden. Die sicherheitsrelevante Vorrichtung V2 sendet beispielhaft eine Nachricht mit Sicherheitsklasse S2 an die sicherheitsrelevante Vorrichtung V1. Diese sicherheitsrelevante Vorrichtung probiert jetzt alle öffentlichen Schlüssel PU1, PU2, PU3, PU4 zur Entschlüsselung in einer beliebigen Reihenfolge aus. Mit dem öffentlichen Schlüssel PU2 gelingt dann die Entschlüsselung, wobei somit die Sicherheitsklasse S2 zu der Nachricht identifiziert ist. Der empfangenden sicherheitsrelevanten Vorrichtung, hier die sicherheitsrelevante Vorrichtung V2, muss somit die Sicherheitsklasse der empfangenen Nachricht nicht bekannt sein. Alternativ kann die Sicherheitsklasse S1, S2, S3, S4 auch einfach in die Nachricht geschrieben werden. Dann entfällt das Ausprobieren.

Als bevorzugte Variante der Anwendung einer asymmetrischen Verschlüsselung wird dabei eine im Folgenden beschriebene Methode verwendet. Ein privater Schlüssel PRn einer n-ten Sicherheitsklasse, im Folgenden mit priₙ bezeichnet, ergibt mit dem öffentlichen Schlüssel PUn der gleichen Sicherheitsklasse, hier als pubₙ bezeichnet, durch Verknüpfung das neutrale Element 1 in der Restklasse, also priₙ⊗ pubₙ =1 mod a^{l}, wobei a die Anzahl der möglichen Werte pro Zeichen, l die zu Grunde liegende Zeichenlänge, a^{l} die Anzahl der voneinander verschiedenen Schlüssel und = die Kongruenz repräsentiert, wobei in der konkreten Ausführungsform beispielhaft n die Werte n=1,2,3,4 einnehmen kann. Der öffentliche Schlüssel PUn der n-ten Sicherheitsklasse ist demnach in der Restklasse das inverse Element zum privaten Schlüssel PRn. Typischerweise liegt ein binäres System vor, was also a=2 entspricht und die bevorzugte Variante ist. Die Bitlänge l liegt häufig bei l=128-160 bit, jedoch können kürzere oder längere Bitlängen und somit kürzere und längere Schlüssel verwendet werden.

Als Verknüpfungen ⊗ kommen verschiedene zweckmäßige Operationen in Frage. Beispielsweise sind auch Matrixverknüpfungen eingeschlossen. Bevorzugt jedoch ergibt der öffentliche Schlüssel PUn multipliziert mit dem privaten Schlüssel PRn in der Restklasse 1, wobei dadurch wieder der originale Prüfwert oder die originale Nachricht erhalten wird. Die Ausführgeschwindigkeit liegt dabei im Bereich von Mikrosekunden (1µs=10⁻⁶s) oder darunter. Diese besonders einfache und schnelle asymmetrische Verschlüsselung eignet sich insbesondere daher, da es sich lediglich um die Erkennung von zufälligem Fehlverhalten handelt.

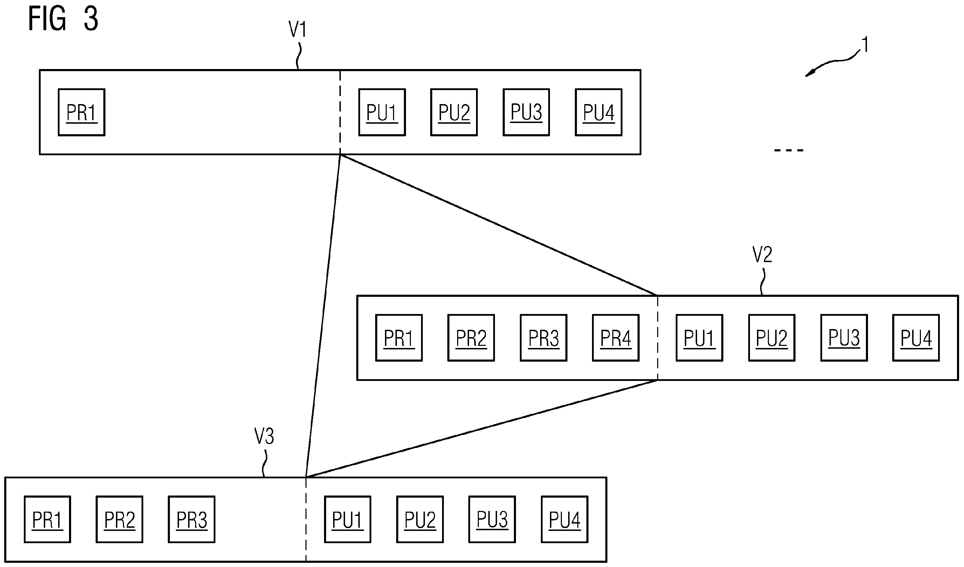

In der Figur 3 wird eine schematische Darstellung eines Kommunikationssystems 1 zur Ausführung des Verfahrens zum Austausch von Nachrichten mit unterschiedlichen Sicherheitsklassen nach einer beispielhaften Ausführungsform gezeigt. Figur 3 zeigt eine Mehrzahl von sicherheitsrelevanten Vorrichtungen V1, V2, V3, hier beispielhaft drei, die jeweils miteinander verbunden sind und jeweils einer bestimmten Sicherheitsklasse S1, S2, S3, S4 zugeordnet sind. Dieses Netzwerk kann beliebig erweitert werden. Jede sicherheitsrelevante Vorrichtung V1, V2, V3 weist dabei zum Entschlüsseln einer Nachricht oder eines Prüfwerts jeden öffentlichen Schlüssel PU1, PU2, PU3, PU4 aller Sicherheitsklassen S1, S2, S3, S4 auf und zum Verschlüsseln einer Nachricht oder eines Prüfwerts private Schlüssel PR1, PR2, PR3, PR4 bis zu der Sicherheitsklasse S1, S2, S3, S4, für die die jeweilige Nachricht der sicherheitsrelevanten Vorrichtung V1, V2, V3 ausgelegt ist. Die sicherheitsrelevante Vorrichtung V1 ist identisch zu der sicherheitsrelevanten Vorrichtung V1 aus Figur 2 und die sicherheitsrelevante Vorrichtung V2 ist identisch zu der sicherheitsrelevanten Vorrichtung V2 aus Figur 2. Die sicherheitsrelevante Vorrichtung V3 weist beispielhaft drei private Schlüssel PR1, PR2, PR3 auf, kann also entsprechend Nachrichten oder Prüfwerte der Sicherheitsklasse S1, S2, S3 verschlüsseln bzw. signieren. Die sicherheitsrelevante Vorrichtung V3 ist somit zum Senden von Nachrichten der Sicherheitsklasse S3 oder niedriger ausgelegt.

Zusammengefasst wird ein Verfahren zum Austausch von Nachrichten zwischen sicherheitsrelevanten Vorrichtungen vorgeschlagen. Das Verfahren hat den Vorteil, dass eine zufällige Vortäuschung einer höheren Sicherheitsklasse S1, S2, S3, S4 nicht unbemerkt bleibt. Dadurch können Nachrichten unterschiedlicher Sicherheitsklassen in einem Protokoll eines Netzwerks unterscheidbar übertragen werden.

Eine solche zufällige Vortäuschung einer höheren Sicherheitsklasse durch fehlerhafte Technik kann beispielsweise programmfehlerbedingt oder auch hardwarefehlerbedingt sein. Absichtliche Vortäuschung einer höheren Sicherheitsklasse ist von der Erfindung nicht eingeschlossen. In einem solchen Fall einer zufälligen Vortäuschung einer höheren Sicherheitsklasse S1, S2, S3, S4 kann der entsprechende öffentliche Schlüssel PR1, PR2, PR3, PR4 dieser vorgetäuschten Sicherheitsklasse S1, S2, S3, S4 der empfangenden sicherheitsrelevanten Vorrichtung V1, V2, V3 keine erfolgreiche Entschlüsselung erzielen. Ferner kann dann sogar die eigentliche Sicherheitsklasse S1, S2, S3, S4 der Nachricht durch den passenden öffentlichen Schlüssel ermittelt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kommunikationssystem
- V1, V2, V3: sicherheitsrelevante Vorrichtung
- S1, S2, S3, S4: Sicherheitsklasse
- PR1, PR2, PR3, PR4, PRn: privater Schlüssel
- PU1, PU2, PU3, PU4, PUn: öffentlicher Schlüssel

## Patentansprüche

1. Verfahren zum Austausch von Nachrichten zwischen sicherheitsrelevanten Vorrichtungen gemäß den folgenden Schritten:
a) Bereitstellen einer Mehrzahl von miteinander verbundenen sicherheitsrelevanten Vorrichtungen (V1, V2, V3), wobei jede sicherheitsrelevante Vorrichtung (V1, V2, V3) einer bestimmten Sicherheitsklasse (S1, S2, S3, S4) zugeordnet ist und wobei das Level an Sicherheit und Zuverlässigkeit und damit die erfüllten Sicherheitsanforderungen desto höher ist, je höher die Sicherheitsklasse ist;
b) Zuordnen von Schlüsselpaaren umfassend einen privaten Schlüssel (PR1, PR2, PR3, PR4) und einen dazu passenden öffentlichen Schlüssel (PU1, PU2, PU3, PU4) zu jeder Sicherheitsklasse (S1, S2, S3, S4), wobei sich die Schlüssel und Schlüsselpaare jeder entsprechenden Sicherheitsklasse (S1, S2, S3, S4) voneinander unterscheiden;
c) Zuordnen der öffentlichen Schlüssel (PU1, PU2, PU3, PU4) jeder Sicherheitsklasse (S1, S2, S3, S4) zu jeder sicherheitsrelevanten Vorrichtung (V1, V2, V3);
d) Zuordnen von denjenigen privaten Schlüsseln (P1, P2, P3, P4) zu einer jeweiligen sicherheitsrelevanten Vorrichtung (V1, V2, V3) entsprechend einer Sicherheitsklasse (S1, S2, S3, S4), die niedriger oder gleich der Sicherheitsklasse der jeweiligen sicherheitsrelevanten Vorrichtung (V1, V2, V3) sind;
e) Senden und Verschlüsseln einer Nachricht oder eines Prüfwerts durch eine sicherheitsrelevante Vorrichtung (V1, V2, V3) mit einem der einen sicherheitsrelevanten Vorrichtung (V1, V2, V3) zugeordnetem privaten Schlüssel (PR1, PR2, PR3, PR4) einer bestimmten Sicherheitsklasse (S1, S2, S3, S4);
f) Empfangen der Nachricht oder des Prüfwerts und Identifizieren der Sicherheitsklasse zu der Nachricht durch Entschlüsseln der Nachricht durch eine oder mehrere sicherheitsrelevante Vorrichtungen (V1, V2, V3) mit dem zugeordneten öffentlichen Schlüssel (PU1, PU2, PU3, PU4) zu der gleichen Sicherheitsklasse (S1, S2, S3, S4) wie der zur Verschlüsselung verwendete private Schlüssel (PR1, PR2, PR3, PR4) aus Schritt e).

2. Verfahren nach Anspruch 1, wobei die verschlüsselte Nachricht den eigentlichen Nachrichteninhalt und einen daran angehängten verschlüsselten Prüfwert umfasst.

3. Verfahren nach Anspruch 2, wobei ferner eine Integritätsprüfung durch Prüfen der Gleichheit des entschlüsselten Prüfwerts mit dem aus der gesendeten Nachricht errechneten Prüfwert erfolgt.

4. Verfahren nach einem der vorherigen Ansprüche, wobei das Entschlüsseln durch eine sicherheitsrelevante Vorrichtung (V1, V2, V3) durch Verwenden aller zugeordneten öffentlichen Schlüssel (PR1, PR2, PR3, PR4) der verschiedenen Sicherheitsklassen (S1, S2, S3, S4) erfolgt, bis die verschlüsselte Nachricht oder der verschlüsselte Prüfwert durch einen zugeordneten öffentlichen Schlüssel (PU1, PU2, PU3, PU4) einer Sicherheitsklasse (S1, S2, S3, S4) entschlüsselt ist.

5. Verfahren nach einem der vorherigen Ansprüche, wobei die Sicherheitsklassen (S1, S2, S3, S4) ein Sicherheitsintegritätslevel von 0, 1, 2, 3, 4 haben.

6. Verfahren nach Anspruch 5, wobei mindestens eine sicherheitsrelevante Vorrichtung (V1, V2, V3) ein Sicherheitsintegrationslevel von größer oder gleich 1 hat.

7. Verfahren nach einem der vorherigen Ansprüche, wobei der zugeordnete private Schlüssel (PR1, PR2, PR3, PR4) einer Sicherheitsklasse (S1, S2, S3, S4) multipliziert mit dem zugeordneten öffentlichen Schlüssel (PU1, PU2, PU3, PU4) aus der gleichen Sicherheitsklasse (S1, S2, S3, S4) in der Restklasse 1 ergibt, wobei dadurch wieder der originale Prüfwert oder die originale Nachricht erhalten wird.

8. Kommunikationssystem (1) zum Ausführen des Verfahrens nach einem der vorherigen Ansprüche, umfassend:
a) eine Mehrzahl von sicherheitsrelevanten Vorrichtungen (V1, V2, V3), die jeweils miteinander verbunden sind und jeweils einer bestimmten Sicherheitsklasse (S1, S2, S3, S4) zugeordnet sind, wobei das Level an Sicherheit und Zuverlässigkeit und damit die erfüllten Sicherheitsanforderungen desto höher ist, je höher die Sicherheitsklasse ist und wobei Schlüsselpaaren umfassend einen privaten Schlüssel (PR1, PR2, PR3, PR4) und einen dazu passenden öffentlichen Schlüssel (PU1, PU2, PU3, PU4) zu jeder Sicherheitsklasse (S1, S2, S3, S4) zur Verfügung stehen, wobei sich die Schlüssel und Schlüsselpaare jeder entsprechenden Sicherheitsklasse (S1, S2, S3, S4) voneinander unterscheiden,
b) jede sicherheitsrelevante Vorrichtung (V1, V2, V3) zum Entschlüsseln einer Nachricht oder eines Prüfwerts jeden öffentlichen Schlüssel (PU1, PU2, PU3, PU4) aller Sicherheitsklassen (S1, S2, S3, S4) zugeordnet sind und zum Verschlüsseln einer Nachricht oder eines Prüfwerts private Schlüssel (PR1, PR2, PR3, PR4) zugeordnet sind, die niedriger oder gleich der Sicherheitsklasse (S1, S2, S3, S4) sind, für die die jeweilige sicherheitsrelevante Vorrichtung (V1, V2, V3) ausgelegt ist,
c) wobei jede sicherheitsrelevante Vorrichtung (V1, V2, V3) eingerichtet ist zum Senden und Verschlüsseln einer Nachricht oder eines Prüfwerts einen der jeweiligen sicherheitsrelevanten Vorrichtung (V1, V2, V3) zugeordneten privaten Schlüssel (PR1, PR2, PR3, PR4) einer bestimmten Sicherheitsklasse (S1, S2, S3, S4) zu verwenden;
d) wobei die sicherheitsrelevanten Vorrichtungen (V1, V2, V3) eingerichtet sind zum Empfangen der Nachricht oder des Prüfwerts und Identifizieren der Sicherheitsklasse zu der Nachricht durch Entschlüsseln der Nachricht durch eine oder mehrere sicherheitsrelevante Vorrichtungen (V1, V2, V3) mit dem zugeordneten öffentlichen Schlüssel (PU1, PU2, PU3, PU4) zu der gleichen Sicherheitsklasse (S1, S2, S3, S4) wie der zur Verschlüsselung verwendete private Schlüssel (PR1, PR2, PR3, PR4) aus Schritt c).

9. Computerprogramm, das es einer Datenverarbeitungseinrichtung ermöglicht, nachdem es in Speichermittel der Datenverarbeitungseinrichtung geladen worden ist, ein Verfahren zum Austausch von Nachrichten zwischen sicherheitsrelevanten Vorrichtungen gemäß einem der Ansprüche 1 bis 7 durchzuführen.

10. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Austausch von Nachrichten zwischen sicherheitsrelevanten Vorrichtungen gemäß einem der Ansprüche 1 bis 7 durchzuführen.

## Claims

1. Method for exchanging messages between security-relevant apparatuses in accordance with the following steps:
a) provision of a plurality of security-relevant apparatuses (V1, V2, V3) linked to one another, wherein each security-relevant apparatus (V1, V2, V3) is assigned to a particular security class (S1, S2, S3, S4) and wherein the higher the security class, the higher is the level of security and reliability and therefore the security requirements fulfilled;
b) assignment of pairs of keys, comprising a private key (PR1, PR2, PR3, PR4) and a public key (PU1, PU2, PU3, PU4) matching it, to each security class (S1, S2, S3, S4), wherein the keys and pairs of keys of each respective security class (S1, S2, S3, S4) differ from one another;
c) assignment of the public keys (PU1, PU2, PU3, PU4) of each security class (S1, S2, S3, S4) to each security-relevant apparatus (V1, V2, V3);
d) assignment of those private keys (P1, P2, P3, P4) that are lower than or equal to the security class of the respective security-relevant apparatus (V1, V2, V3) to each security-relevant apparatus (V1, V2, V3), according to a security class (S1, S2, S3, S4);
e) sending and encrypting of a message or a check value by a security-relevant apparatus (V1, V2, V3) with a private key (PR1, PR2, PR3, PR4) of a particular security class (S1, S2, S3, S4) that is assigned to the one security-relevant apparatus (V1, V2, V3);
f) receiving of the message or the check value and identification of the security class of the message by decrypting the message by means of one or more security-relevant apparatuses (V1, V2, V3) with the assigned public key (PU1, PU2, PU3, PU4) of the same security class (S1, S2, S3, S4) as the private key (PR1, PR2, PR3, PR4) used for encrypting in step e).

2. Method according to claim 1, wherein the encrypted message comprises the actual message content and an encrypted check value appended thereto.

3. Method according to claim 2, wherein furthermore an integrity check takes place by checking whether the decrypted check value is equal to the check value calculated from the transmitted message.

4. Method according to one of the preceding claims, wherein the decryption takes place by means of a security-relevant apparatus (V1, V2, V3) through the use of all the assigned public keys (PR1, PR2, PR3, PR4) of the different security classes (S1, S2, S3, S4) until the encrypted message or the encrypted check value is decrypted by means of an assigned public key (PU1, PU2, PU3, PU4) of one security class (S1, S2, S3, S4).

5. Method according to one of the preceding claims, wherein the security classes (S1, S2, S3, S4) have a safety integrity level of 0, 1, 2, 3, 4.

6. Method according to claim 5, wherein at least one security-relevant apparatus (V1, V2, V3) has a safety integrity level of greater than or equal to 1.

7. Method according to one of the preceding claims, wherein the assigned private key (PR1, PR2, PR3, PR4) of one security class (S1, S2, S3, S4), multiplied by the assigned public key (PU1, PU2, PU3, PU4) from the same security class (S1, S2, S3, S4) results in the residue class 1, wherein thereby the original check value or the original message is obtained.

8. Communication system (1) for carrying out the method according to one of the preceding claims, comprising:
a) a plurality of security-relevant apparatuses (V1, V2, V3) which are each connected to one another and each assigned to a particular security class (S1, S2, S3, S4), wherein the higher the security class, the higher is the level of security and reliability and therefore the security requirements fulfilled, and wherein pairs of keys comprising a private key (PR1, PR2, PR3, PR4) and a public key (PU1, PU2, PU3, PU4) matching it are available for each security class (S1, S2, S3, S4), wherein the keys and pairs of keys of each corresponding security class (S1, S2, S3, S4) differ from one another,
b) each security-relevant apparatus (V1, V2, V3) is assigned to each public key (PU1, PU2, PU3, PU4) of all the security classes (S1, S2, S3, S4) for decrypting a message or a check value and, for encrypting a message or a check value, is assigned private keys (PR1, PR2, PR3, PR4) which are lower than or equal to the security class (S1, S2, S3, S4) for which the respective security-relevant apparatus (V1, V2, V3) is configured,
c) wherein each security-relevant apparatus (V1, V2, V3) is embodied, for sending and encrypting of a message or a check value, to use a private key (PR1, PR2, PR3, PR4) of a particular security class (S1, S2, S3, S4) that is assigned to the respective security-relevant apparatus (V1, V2, V3),
d) wherein the security-relevant apparatuses (V1, V2, V3) are embodied for receiving the message or the check value and identifying the security class of the message by decrypting the message by means of one or more security-relevant apparatuses (V1, V2, V3) with the assigned public key (PU1, PU2, PU3, PU4) of the same security class (S1, S2, S3, S4) as the private key (PR1, PR2, PR3, PR4) used for encrypting in step c).

9. Computer program which enables a data processing device to execute, once it has been loaded into the storage medium of the data processing device, a method for the exchange of messages between security-relevant apparatuses according to one of claims 1 to 7.

10. Computer-readable storage medium on which a program is stored which enables a data processing device, once it has been loaded into the storage medium of the data processing device, to execute a method for the exchange of messages between security-relevant apparatuses according to one of claims 1 to 7.

## Revendications

1. Procédé d'échange de messages entre des dispositifs relevant de la sécurité, conformément aux stades suivants :
a) on se procure une pluralité de dispositifs (V1, V2, V3) relevant de la sécurité reliés entre eux, chaque dispositif (V1, V2, V3) relevant de la sécurité étant associé à une classe (S1, S2, S3, S4) de sécurité définie et le niveau de sécurité et la fiabilité et ainsi la satisfaction des exigences de sécurité étant d'autant plus grand que la classe de sécurité est plus haute ;
b) on associe des paires de clés comprenant une clé (PR1, PR2, PR3, PR4) privée et une clé (PU1, PU2, PU3, PU4) publique s'y adaptant à chaque classe (S1, S2, S3, S4) de sécurité, les clés et les paires de clés de chaque classe (S1, S2, S3, S4) de sécurité correspondante étant différentes les unes des autres ;
c) on associe la clé (PU1, PU2, PU3, PU4) publique de chaque classe (S1, S2, S3, S4) de sécurité à chaque dispositif (V1, V2, V3) relevant de la sécurité ;
d) on associe les clés (P1, P2, P3, P4) privées à un dispositif (V1, V2, V3) relevant de la sécurité respectif en rapport avec une classe (S1, S2, S3, S4) de sécurité, qui est plus basse ou la même que la classe de sécurité du dispositif (V1, V2, V3) respectif relevant de la sécurité ;
e) on envoie et on chiffre un message ou une valeur de contrôle par un dispositif (V1, V2, V3) relevant de la sécurité par une clé (PR1, PR2, PR3, PR4) privée, associée au un dispositif (V1, V2, V3) relevant de la sécurité, d'une classe (S1, S2, S3, S4) de sécurité déterminée ;
f) on reçoit le message ou la valeur de contrôle et on identifie la classe de sécurité pour le message en déchiffrant le message par un ou par plusieurs dispositifs (V1, V2, V3) relevant de la sécurité par la clé (PU1, PU2, PU3, PU4) publique associée se rapportant à la même classe (S1, S2, S3, S4) de sécurité que la clé (PR1, PR2, PR3, PR4) privée, utilisée pour le chiffrement, du stade e).

2. Procédé suivant la revendication 1, dans lequel le message chiffré comprend le contenu proprement dit du message et une valeur de contrôle chiffrée, qui s'y rattache.

3. Procédé suivant la revendication 2, dans lequel on effectue, en outre, un contrôle d'intégrité par contrôle de l'identité de la valeur de contrôle déchiffrée par la valeur de contrôle calculée à partir du message envoyé.

4. Procédé suivant l'une des revendications précédentes, dans lequel le déchiffrement par un dispositif (V1, V2, V3) relevant de la sécurité s'effectue en utilisant toutes les clés (PR1, PR2, PR3, PR4) publiques associées des diverses classes (S1, S2, S3, S4) de sécurité, jusqu'à ce que le message chiffré ou la valeur de contrôle chiffrée soit déchiffré par une clé (PU1, PU2, PU3, PU4) publique associée d'une classe (S1, S2, S3, S4) de sécurité.

5. Procédé suivant l'une des revendications précédentes, dans lequel les classes (S1, S2, S3, S4) de sécurité ont un niveau d'intégrité de sécurité de 0, 1, 2, 3, 4.

6. Procédé suivant la revendication 5, dans lequel au moins un dispositif (V1, V2, V3) relevant de la sécurité a un niveau d'intégrité de sécurité supérieur ou égal à 1.

7. Procédé suivant l'une des revendications précédentes, dans lequel la clé (PR1, PR2, PR3, PR4) privée associée d'une classe (S1, S2, S3, S4) de sécurité multipliée par la clé (PU1, PU2, PU3, PU4) publique associée de la même classe (S1, S2, S3, S4) de sécurité se trouve dans la même classe 1 restante, grâce à quoi on obtient à nouveau la valeur de contrôle d'origine ou le message d'origine.

8. Système (1) de communication pour exécuter le procédé suivant l'une des revendications précédentes, comprenant :
a) une pluralité de dispositifs (V1, V2, V3) qui sont reliés entre eux et qui sont associés chacun à une classe (S1, S2, S3, S4) de sécurité déterminée, le niveau de sécurité et la fiabilité et ainsi la satisfaction des exigences de sécurité étant d'autant plus grand que la classe de sécurité est plus haute et dans lequel des paires de clés comprenant une clé (PR1, PR2, PR3, PR4) privée et une clé (PU1, PU2, PU3, PU4) publique s'y adaptant sont à la disposition de chaque classe (S1, S2, S3, S4) de sécurité, les clés et les paires de clés de chaque classe (S1, S2, S3, S4) de sécurité se distinguant les unes des autres,
b) à chaque dispositif (V1, V2, V3) relevant de la sécurité sont associées, pour le déchiffrement d'un message ou d'une valeur de contrôle, chaque clé (PU1, PU2, PU3, PU4) publique de toutes les classes (S1, S2, S3, S4) de sécurité et pour le déchiffrement d'un message ou d'une valeur de contrôle sont associées des clés (PR1, PR2, PR3, PR4) privées, qui sont plus basses ou égales à la classe (S1, S2, S3, S4) de sécurité pour laquelle le dispositif (V1, V2, V3) relevant de la sécurité est conçu,
c) dans lequel chaque dispositif (V1, V2, V3) relevant de la sécurité est conçu afin d'envoyer et chiffrer un message ou une valeur de contrôle et afin d'utiliser une clé (PR1, PR2, PR3, PR4) privée, associée au dispositif (V1, V2, V3) respectif relevant de la sécurité, d'une classe (S1, S2, S3, S4) de sécurité déterminée ; (
d) dans lequel les dispositifs (V1, V2, V3) relevant de la sécurité sont conçus pour recevoir le message ou la valeur de contrôle et identifier la classe de sécurité se rapportant au message, en déchiffrant le message par des clés (PU1, PU2, PU3, PU4) publiques par un ou par plusieurs dispositifs (V1, V2, V3) relevant de la sécurité, par la clé (PU1, PU2, PU3, PU4) publique associée se rapportant à la même classe (S1, S2, S3, S4) de sécurité que la clé (PR1, PR2, PR3, PR4) publique utilisée pour le déchiffrement dans le stade c).

9. Programme d'ordinateur, qui rend possible à un dispositif de traitement de données, après qu'il a été chargé dans un moyen de mémoire du dispositif de traitement de données, d'effectuer un procédé d'échange de messages entre des dispositifs relevant de la sécurité suivant l'une des revendications 1 à 7.

10. Support de mémoire déchiffrable par ordinateur, sur lequel est mis en mémoire un programme, qui rend possible à un dispositif de traitement de données, après qu'il a été chargé dans un moyen de mémoire du dispositif de traitement de données, d'effectuer un procédé d'échange de messages entre des dispositifs relevant de la sécurité suivant l'une des revendications 1 à 7.
